# EUROPEAN PATENT SPECIFICATION

(11) **EP 3 519 249 B1**
(45) Date of publication and mention of the grant of the patent: **15.04.2026**
(21) Application number: 17857284.8
(22) Date of filing: 26.09.2017
(51) Int. Cl.: B60R 1/00, B08B 5/00, B08B 11/00, G03B 17/02, H04N 23/57, G03B 17/56

(54) **AIR SCOOP TO DIRECT AIRFLOW OVER CAMERA LENS**
LUFTSCHAUFEL ZUR STEUERUNG EINER LUFTSTRÖMUNG ÜBER EINE KAMERALINSE
PRISE D'AIR POUR DIRIGER UN FLUX D'AIR SUR UNE LENTILLE DE CAMÉRA

(30) Priority: 29.09.2016 US 201662401665 P
(43) Date of publication of application: 07.08.2019
(73) Proprietor: Gentex Corporation, Zeeland, MI 49464 (US)
(72) Inventor: HENDRICKS, Michael G., Zeeland, Michigan 49464 (US); KUESTER, Ulrich A., Zeeland, Michigan 49464 (US)
(74) Representative: Müller-Boré & Partner Patentanwälte PartG mbB
(86) International application number: PCT/US2017/053463
(87) International publication number: WO 2018/064049

(56) References cited:
- EP-A1- 2 983 352
- JP-A- 2011 240 920
- TW-A- 201 402 372
- US-A1- 2006 232 670
- US-A1- 2012 327 234
- US-A1- 2014 036 132
- US-B1- 6 473 001

## Description

### FIELD OF THE DISCLOSURE

The present disclosure generally relates to an air scoop for a vehicle, and more particularly to an air scoop to direct airflow over a camera lens for a vehicle.

US 2012/327234 A1 describes an imager module for a vehicle including a support having a first side and a second side. A shroud is operably coupled with the first side. The support and the shroud define a cavity. A viewing aperture is disposed in one of the support and the shroud. An imager system is disposed in the cavity. An electrical connector is configured to provide communication with the imager system. The electrical connector is disposed outside the cavity in abutting contact with the second side of the support.

EP 2 983 352 A1 describes an optical device, a lidar device, and an imaging device which are applied easily in a case where a casing has a waterproof structure or an airtight structure.

JP 2011 240 920 A describes a camera cover capable of attaching and detaching a camera including a washer nozzle for washing the lens surface of a lens of the camera by injecting a washer fluid supplied from a washer fluid tank capable of storing the washer fluid toward the lens surface.

TW 201 402 372 A describes a vehicle headlight including a housing which is fixed to a body of a vehicle, and which defines a light chamber opened at least forwardly of the body of the vehicle, and a light source which is incorporated into the light chamber.

### SUMMARY OF THE DISCLOSURE

The underlying technical problem is solved by the imager assembly for a vehicle according to claim 1. Preferred embodiments are defined in the dependent claims. The imager assembly for a vehicle includes a base plate. An imager is disposed above the base plate. A shroud is configured to engage a top portion of the base plate. The shroud includes a tapered profile with a narrow forward end and a widened rearward end. The widened rearward end defines an aperture that receives a lens cover in optical communication with the imager. An air scoop disposed on a top portion of the shroud. The air scoop includes a forward mouth for receiving air and a rearward discharge that moves air across the lens cover. The air scoop includes an upper lateral portion and a lower vertical portion and the upper lateral portion is shorter in length than the lower vertical portion. The upper lateral portion includes a forwardly-extending lip projecting therefrom.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front top perspective view of a shroud of an imager assembly; which is not part of the invention.
FIG. 1A is an enlarged top perspective view of the shroud of FIG. 1;
FIG. 2 is a front top elevational view of the shroud of FIG. 1;
FIG. 3 is a bottom perspective view of the shroud of FIG. 1;
FIG. 4 is a rear elevational view of the shroud of FIG. 1;
FIG. 5 is a front elevational view of the shroud of FIG. 1;
FIG. 6 is a first side elevational view of the shroud of FIG. 1;
FIG. 7 is a second side elevational view of the shroud of FIG. 1;
FIG. 8 is a top plan view of the shroud of FIG. 1;
FIG. 9 is a bottom plan view of the shroud of FIG. 1;
FIG. 10 is a front top perspective view of another shroud of an imager assembly of the present disclosure; which is part of the invention.
FIG. 11 is a rear top perspective view of the shroud of FIG. 10;
FIG. 12 is an enlarged perspective view of the shroud of FIG. 10 with the air scoop and lens cover removed;
FIG. 13 is a bottom perspective view of the shroud of FIG. 10;
FIG. 14 is a rear elevational view of the shroud of FIG. 10;
FIG. 15 is a front elevational view of the shroud of FIG. 10;
FIG. 16 is a first side elevational view of the shroud of FIG. 10;
FIG. 17 is a second side elevational view of the shroud of FIG. 10;
FIG. 18 is a top plan view of the shroud of FIG. 10; and
FIG. 19 is a bottom plan view of the shroud of FIG. 10.

### DETAILED DESCRIPTION

The present illustrated embodiments reside primarily in combinations of method steps and apparatus components related to an imager assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

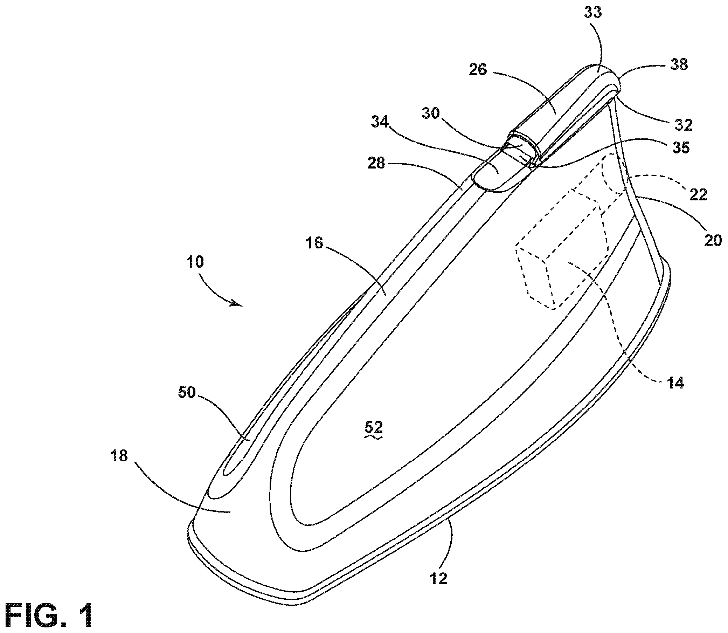

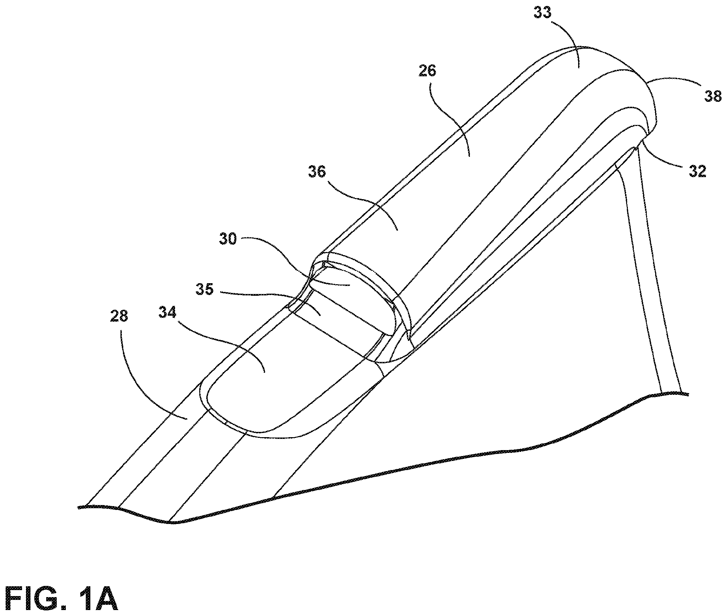

For purposes of description herein, the terms "upper," "lower," "right," "left," "rear," "front," "vertical," "horizontal," and derivatives thereof, shall relate to the disclosure as oriented in FIG. 1. Unless stated otherwise, the term "front" shall refer to the surface of the device closer to an intended viewer of the device, and the term "rear" shall refer to the surface of the device further from the intended viewer of the device. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

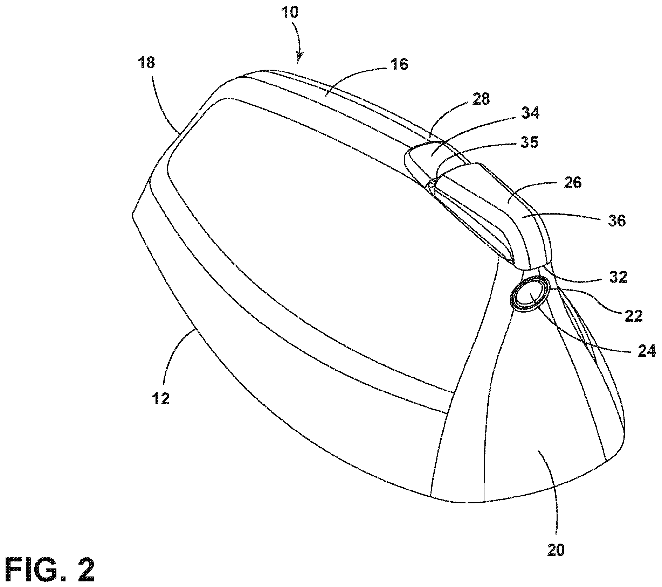

Referring to FIGS. 1 and 2, reference numeral 10 generally designates an imager assembly for a vehicle that includes a base plate 12. An imager 14 is disposed above the base plate 12, or an internal bracket or a shroud 16. The shroud 16 is configured to engage a top portion of the base plate 12, a side of the base plate 12, or another internal bracket. The shroud 16 includes a tapered profile with a narrow forward end 18 and a narrow rearward end 20. The narrow rearward end 20 defines an aperture 22 that receives a lens cover 24 in optical communication with the imager 14. An air scoop 26 is defined in a top portion 28 of the shroud 16. The air scoop 26 includes a forward mouth 30 for receiving air and a rearward discharge 32 that moves air across the lens cover 24.

With reference now to FIG. 1A, the air scoop 26 includes an elongate body 33 that extends in a generally rearward lateral direction over a recess 34. The recess 34 may result in an increase in airflow into the mouth 30. The elongate body 33 includes a rounded forward lip 35 that tapers into the recess 34. The forward lip 35 helps direct air into the mouth 30, which is then funneled along a channel 37 of the air scoop 26 until being expelled from the rearward discharge 32 and across the lens cover 24. The lens cover 24 fits within the aperture 22 and may be sealed with the shroud 16 proximate the aperture 22 and held in place by glue, snap-fit connections, etc.

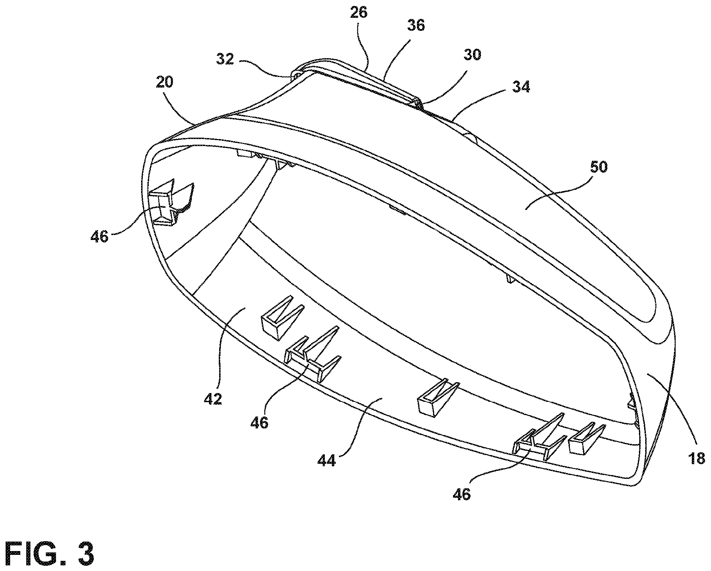

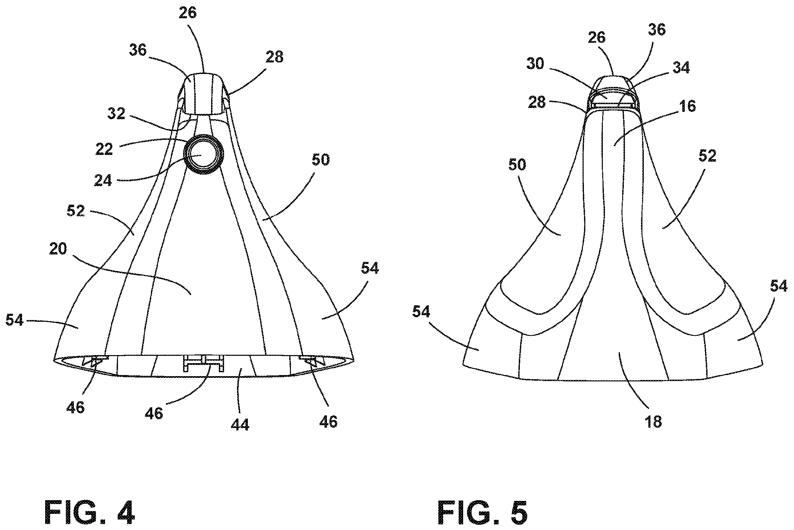

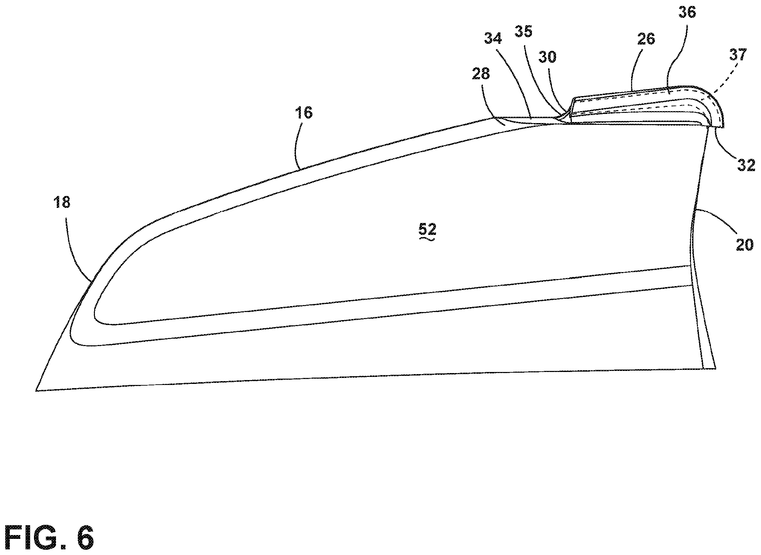

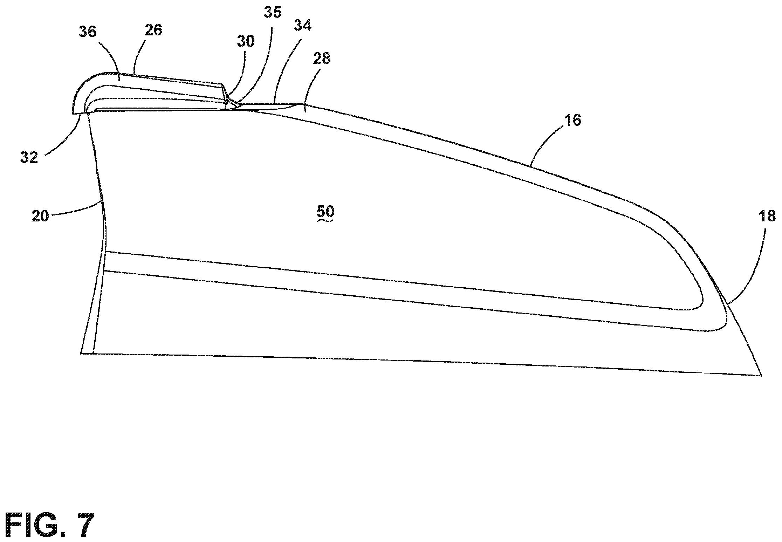

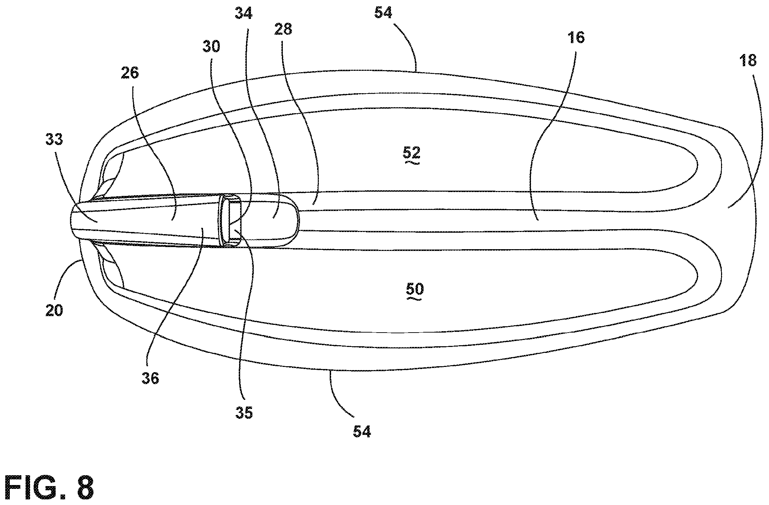

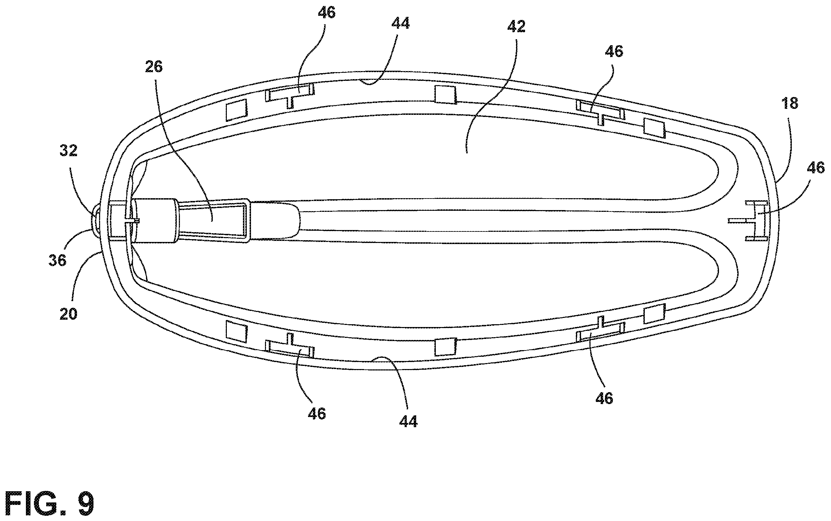

As illustrated in FIGS. 1-9, the elongate body 33 includes a rounded hood 36 that transitions the elongate body 33 into a vertical portion 38 that directs air within the channel 37 downward and out through the mouth 30. However, it will be understood that the rounded hood 36 could also include different shapes and profiles, depending on the desired performance and preferred aesthetics. Notably, the position of the air scoop 26 is not restricted to the top portion 28 of the shroud 16. The air scoop 26 could be positioned on the sides or various other locations on the shroud 16. Further, the forward mouth 30 may be larger than the rearward discharge 32, resulting in an increased airflow speed descending over the lens cover 24.

With reference now to FIGS. 2-9, the shroud 16 is generally configured for use to conceal the imager 14, as well as an antenna, or other components. The shroud 16 is generally weather resistant and operable for positioning on a vehicle. However, many antenna assemblies currently used incorporate the shroud 16 as a decorative cover. In this instance, waterproofing is typically conducted with a secondary inner cover that is attached and sealed to the base plate 12. The outer cover is then attached to the base plate 12 and the inner cover. In the event an inner cover was present, the imager 14 would attached to the inner cover. A bottom portion of the shroud 16 generally defines an opening 42 configured for receiving the base plate 12. An inside wall 44 of the shroud 16 includes a plurality of mechanical fastener features 46 that are configured for frictional engagement or snap fitting engagement with the base plate 12. Alternatively, the shroud 16 could be configured to engage directly with the vehicle. The shroud 16 includes first and second sides 50, 52 that include a generally sleek profile. The first and second sides 50, 52 of the shroud 16 define the narrow forward end 18 and the narrow rearward end 20, and also define a widened midportion 54 of the shroud 16. As a result, the shroud 16 includes substantial aerodynamic qualities. The recess 34 extends forward relative to the forward mouth 30 of the air scoop 26. The recess 34 is positioned forward of the mouth 30 so as not to create a blockage that minimizes airflow into the mouth 30 of the air scoop 26. It will be understood that the shroud 16 may include a variety of shapes and configurations to expel air near or across the lens cover 24.

As previously acknowledged, because the imager assembly 10 is disposed on an external panel of the vehicle, the imager assembly 10 may be subject to harsh weather conditions. Accordingly, the shroud 16 of the imager assembly 10 may be covered by dirt and debris. At the same time, dirt and debris may also cover the lens cover 24. In this event, the imager 14 cannot collect clear image data through the imager 14. Accordingly, a cover construction that effectively passes air over the aperture 22 and the lens cover 24 to clean the lens cover 24 from dirt and debris is useful. As illustrated, the mouth 30 of the air scoop 26 receives air as the vehicle moves in a forward direction. The air is then redirected approximately 90 degrees, thereby blowing air downward across the lens cover 24. It is generally contemplated that the air scoop 26 may be integrally formed as part of the shroud 16, or may be an add-on feature that is applied to an existing shroud 16. As the vehicle speeds up, so too does the airflow into the mouth 30, and consequently the air that is discharged from the rearward discharge 32 downward across the lens cover 24.

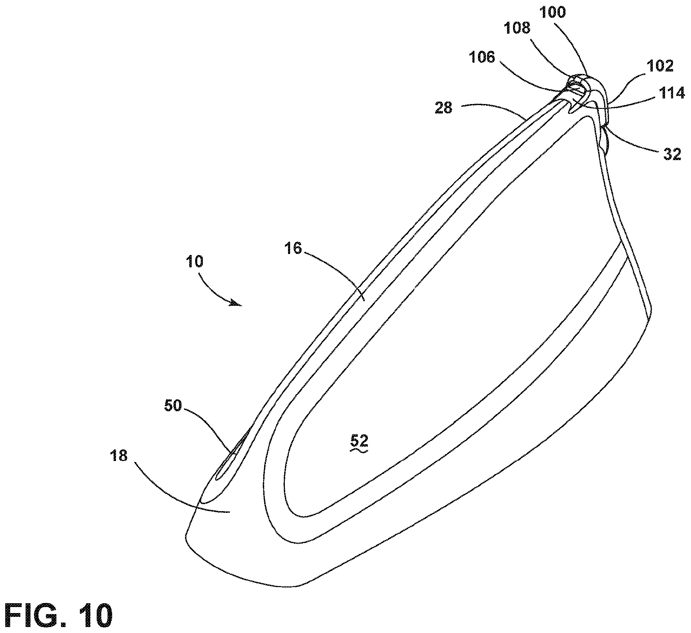

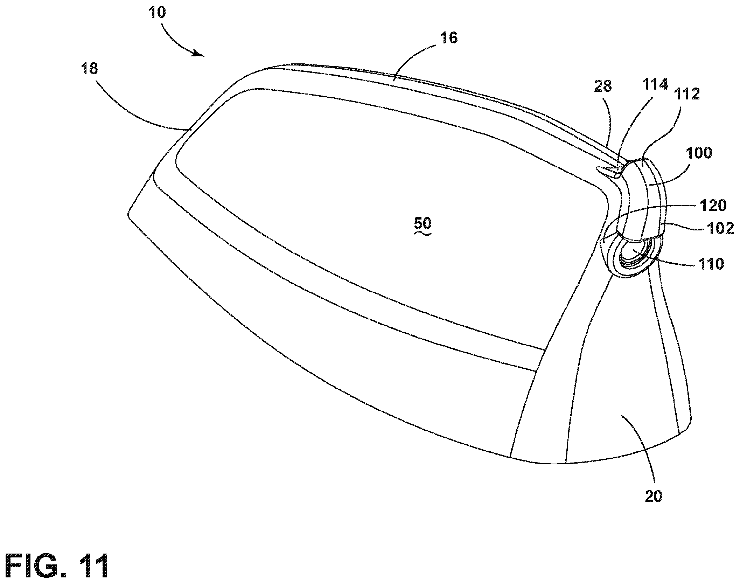

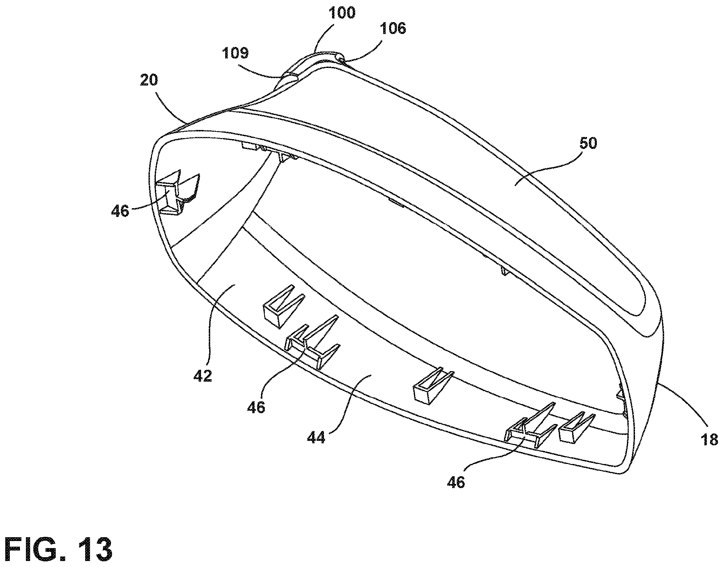

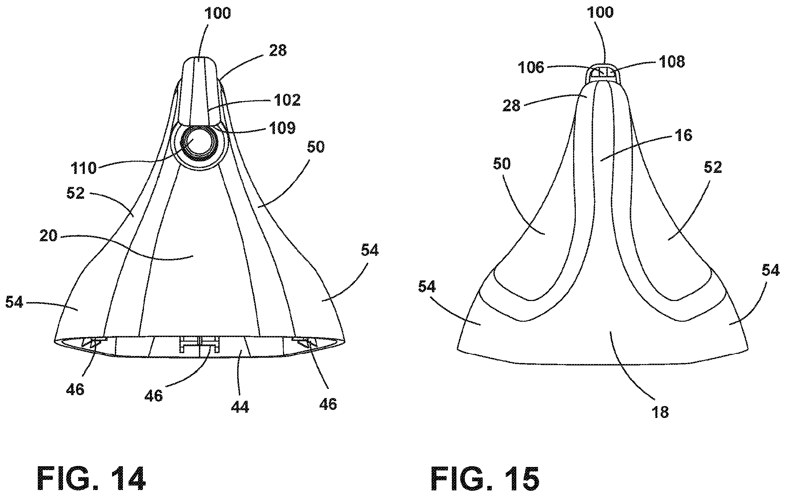

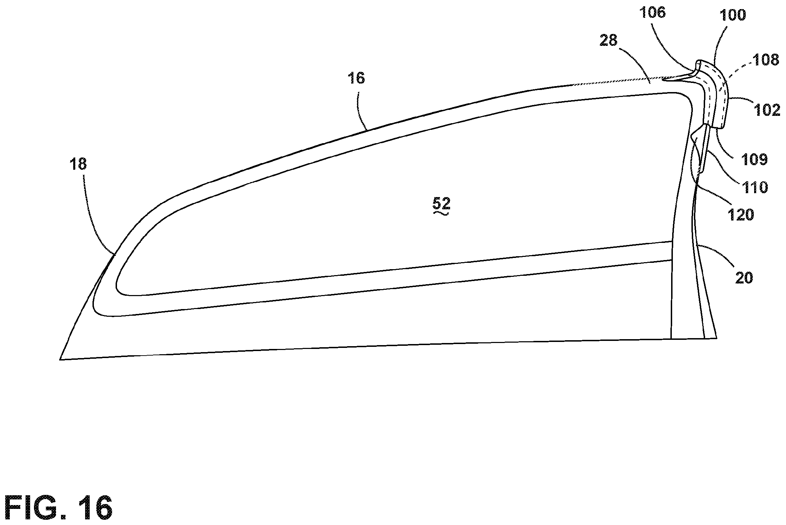

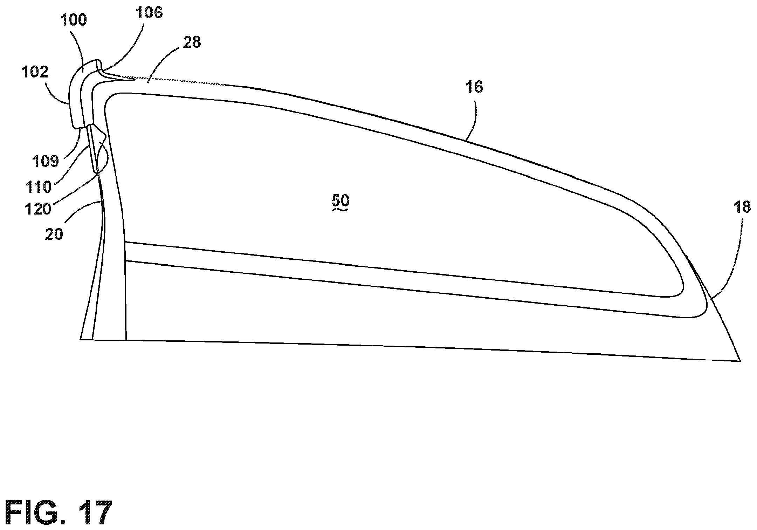

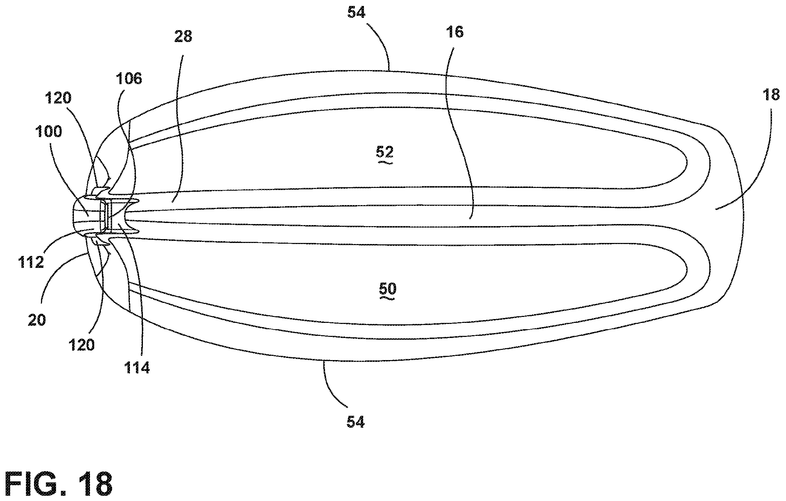

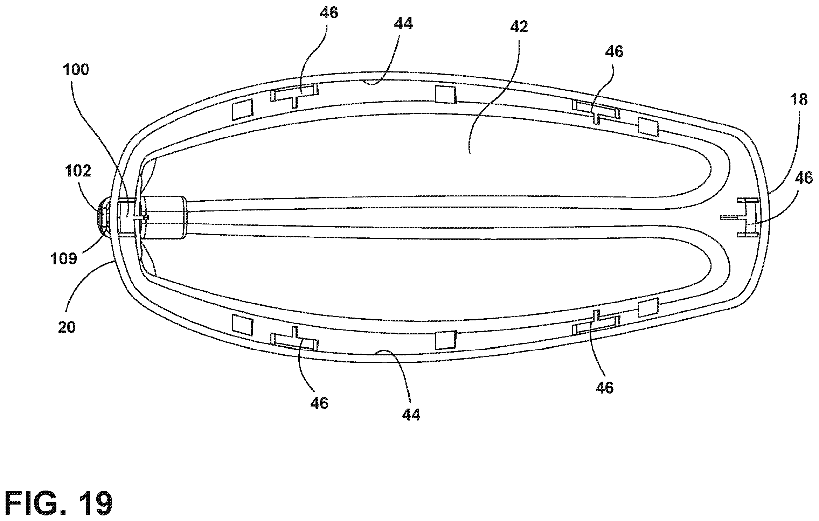

With reference now to FIGS. 10-19, the illustrated imager assembly 10 includes an air scoop 100 that is set back a predetermined distance proximate the rearward end 20 of the imager assembly 10. In this instance, the air scoop 100 includes an elongate lower vertical portion 102 that extends in a primarily vertical direction. The air scoop 100 includes a mouth 106 that draws air into a channel 108 of the air scoop 100 and expels the air from a rearward discharge 109 across a lens cover 110. As shown in FIGS. 10-12, the air scoop 100 includes an upper lateral portion 112 with a forward lip 114 projecting therefrom. The upper lateral portion 112 extends above the shroud 16. Notably, the upper lateral portion 112 is shorter in length than the lower vertical portion 102.

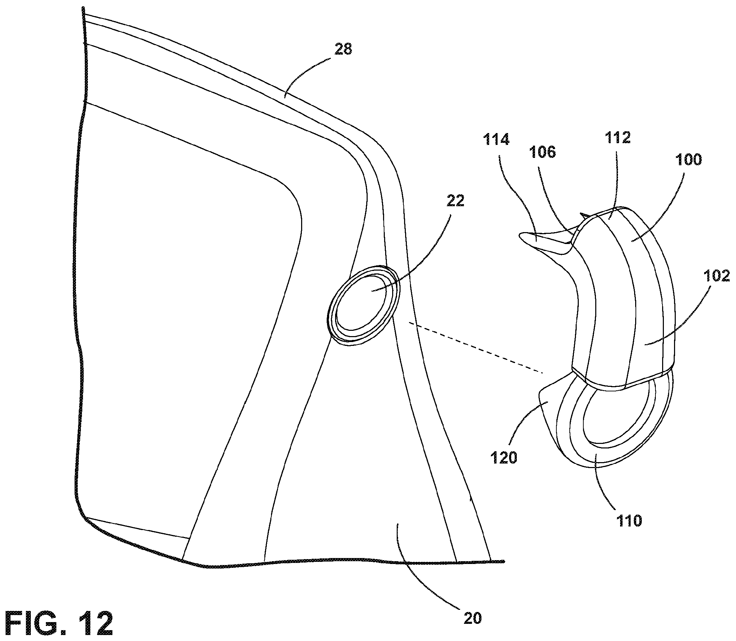

As noted in FIG. 12, the air scoop 100 and the lens cover 110 may be integrally formed together and are generally removable from the imager assembly 10. However, the lens cover 110 may be temporarily sealed to the shroud 16 to prohibit contaminants from entering between the aperture 22 and the lens cover 110. Further, the air scoop 100 may be applied to the shroud 16 of existing antenna assemblies by way of adhesive, mechanical fasteners, heat staking, etc. As illustrated, the forward lip 114 of the air scoop 100 helps direct air into the mouth 106 downward over the lens cover 110. In addition, the lens cover 110 includes side flanges 120 configured to engage sides of the rearward end 20 of the imager assembly 10. This constructions lessens the potential for contaminants entering the space between the lens cover 110 and the aperture 22. To accommodate for different sized shrouds 16, the lens cover 110 and the side flanges 120 may include some degree of flex. It will be understood that other features of the imager assembly 10, as illustrated in FIGS. 10-19, are similar to those illustrated in FIGS. 1-9, and include like reference numerals. It will also be understood that the air scoops as set forth herein could be used in conjunction with other pods or housings and are not restricted to use with rooftop antenna covers.

The antenna assemblies as set forth herein provide a sleek, and aerodynamic manner of removing dirt and debris from an external camera of a vehicle. The antenna assemblies as set forth herein utilize air currents generated during vehicle travel, such that minimal energy is utilized to keep the lens cover clean and assist in maintaining high resolution of quality images for the imager. In each embodiment, the air scoop extends above a topmost portion of the shroud and directs air downward over the lens cover. However, the air scoop could be disposed on a side of the shroud or elsewhere and direct air across the lens cover.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments as long as covered by the following claims.

## Claims

1. An imager assembly (10) for a vehicle comprising:
a base plate (12);
an imager (14) disposed above the base plate (12);
a shroud (16) configured to engage a top portion of the base plate (12), the shroud (16) including a tapered profile with a narrow forward end (18) and a widened rearward end (20), wherein the widened rearward end (20) defines an aperture (22) that receives a lens cover (110) in optical communication with the imager (14);
an air scoop (26, 100) disposed on a top portion (28) of the shroud (16), the air scoop (26, 100) including a forward mouth (30, 106) for receiving air and a rearward discharge (32, 109) that moves air across the lens cover (24, 110),
wherein the air scoop (100) includes an upper lateral portion (112) and a lower vertical portion (102),
**characterized in that**
the upper lateral portion (112) is shorter in length than the lower vertical portion (102); and
wherein the upper lateral portion (112) includes a forwardly-extending lip (114) projecting therefrom.

2. The imager assembly (10) of claim 1, wherein the forward mouth (30, 106) is larger than the rearward discharge (32, 109).

3. The imager assembly (10) of either one of claims 1 or 2, wherein the lens cover (110) includes side flanges (120) extending rearwardly from the lens cover (110).

4. The imager assembly (10) of any one of claims 1 to 3, wherein the lens cover (24, 110) and the air scoop (26, 100) are integrally formed together.

5. The imager assembly (10) of any one of claims 1 to 4, wherein the air scoop (26, 100) extends above a topmost portion of the shroud (16).

6. The imager assembly (10) of any one of claims 1 to 5, wherein the lens cover (24, 110) is sealed to the shroud (16) proximate the aperture (22).

## Patentansprüche

1. Eine Bildaufnehmerbaugruppe (10) für ein Fahrzeug, umfassend:
eine Grundplatte (12);
einen Bildaufnehmer (14), der oberhalb der Grundplatte (12) angeordnet ist;
eine Haube (16), die konfiguriert ist, um mit einem oberen Abschnitt der Grundplatte (12) in Eingriff zu kommen, wobei die Haube (16) ein sich verjüngendes Profil mit einem schmalen vorderen Ende (18) und einem verbreiterten hinteren Ende (20) beinhaltet, wobei das verbreiterte hintere Ende (20) eine Öffnung (22) definiert, die eine Linsenabdeckung (110) aufnimmt, welche in optischer Verbindung mit dem Bildaufnehmer (14) steht;
eine Luftführung (26, 100), die an einem oberen Abschnitt (28) der Haube (16) angeordnet ist, wobei die Luftführung (26, 100) eine vordere Einlassöffnung (30, 106) zum Aufnehmen von Luft und einen hinteren Auslass (32, 109) umfasst, der Luft über die Linsenabdeckung (24, 110) leitet,
wobei die Luftführung (100) einen oberen seitlichen Abschnitt (112) und einen unteren vertikalen Abschnitt (102) beinhaltet,
**dadurch gekennzeichnet, dass**
der obere seitliche Abschnitt (112) in seiner Länge kürzer ist als der untere vertikale Abschnitt (102); und
wobei der obere seitliche Abschnitt (112) eine sich nach vorne erstreckende Lippe (114) beinhaltet, die von diesem vorsteht.

2. Die Bildaufnehmerbaugruppe (10) nach Anspruch 1, wobei die vordere Einlassöffnung (30, 106) größer ist als der hintere Auslass (32, 109).

3. Die Bildaufnehmerbaugruppe (10) nach einem der Ansprüche 1 oder 2, wobei die Linsenabdeckung (110) Seitenflansche (120) beinhaltet, die sich von der Linsenabdeckung (110) nach hinten erstrecken.

4. Die Bildaufnehmerbaugruppe (10) nach irgendeinem der Ansprüche von 1 bis 3, wobei die Linsenabdeckung (24, 110) und die Luftführung (26, 100) einstückig miteinander ausgebildet sind.

5. Die Bildaufnehmerbaugruppe (10) nach irgendeinem der Ansprüche von 1 bis 4, wobei sich die Luftführung (26, 100) oberhalb eines obersten Abschnitts der Haube (16) erstreckt.

6. Die Bildaufnehmerbaugruppe (10) nach irgendeinem der Ansprüche von 1 bis 5, wobei die Linsenabdeckung (24, 110) nahe der Öffnung (22) gegenüber der Haube (16) abgedichtet ist.

## Revendications

1. Un ensemble d'imageur (10) pour un véhicule comprenant :
une plaque de base (12) ;
un imageur (14) disposé au-dessus de la plaque de base (12) ;
un capot (16) configuré pour s'engager avec une portion supérieure de la plaque de base (12), le capot (16) incluant un profil effilé avec une extrémité avant étroite (18) et une extrémité arrière élargie (20), sachant que l'extrémité arrière élargie (20) définit une ouverture (22) qui reçoit un couvercle de lentille (110) en communication optique avec l'imageur (14) ;
une écope d'air (*air scoop*) (26, 100) disposée sur une portion supérieure (28) du capot (16), l'écope d'air (26, 100) incluant un orifice d'entrée avant (30, 106) pour recevoir de l'air et une sortie arrière (32, 109) qui déplace l'air à travers le couvercle de lentille (24, 110),
sachant que l'écope d'air (100) inclut une portion latérale supérieure (112) et une portion verticale inférieure (102),
**caractérisé en ce que**
la portion latérale supérieure (112) est plus courte en longueur que la portion verticale inférieure (102) ;
sachant que la portion latérale supérieure (112) inclut une lèvre s'étendant vers l'avant (114) faisant saillie à partir de celle-ci.

2. L'ensemble d'imageur (10) d'après la revendication 1, sachant que l'orifice d'entrée avant (30, 106) est plus grand que la sortie arrière (32, 109).

3. L'ensemble d'imageur (10) d'après l'une des revendications 1 ou 2, sachant que le couvercle de lentille (110) inclut des brides latérales (120) s'étendant vers l'arrière à partir du couvercle de lentille (110).

4. L'ensemble d'imageur (10) d'après l'une quelconque des revendications de 1 à 3, sachant que le couvercle de lentille (24, 110) et l'écope d'air (26, 100) sont formés d'une seule pièce.

5. L'ensemble d'imageur (10) d'après l'une quelconque des revendications de 1 à 4, sachant que l'écope d'air (26, 100) s'étend au-dessus d'une portion la plus haute du capot (16).

6. L'ensemble d'imageur (10) d'après l'une quelconque des revendications de 1 à 5, sachant que le couvercle de lentille (24, 110) est scellé au capot (16) à proximité de l'ouverture (22).
